(19)

**Europäisches Patentamt**
**European Patent Office**
**Office européen des brevets**

(11) **EP 2 247 011 A1**

(12) **EUROPEAN PATENT APPLICATION**
published in accordance with Art. 153(4) EPC

| | |
|---|---|
| (43) Date of publication:<br>**03.11.2010 Bulletin 2010/44** | (51) Int Cl.:<br>**H04J 11/00** *(2006.01)*  **H04B 7/208** *(2006.01)* |
| (21) Application number: **09711798.0** | (86) International application number:<br>**PCT/JP2009/052367** |
| (22) Date of filing: **13.02.2009** | (87) International publication number:<br>**WO 2009/104515 (27.08.2009 Gazette 2009/35)** |

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | • **NOGAMI, Toshizo**<br>**c/o Sharp Kabushiki Kaisha**<br>**Osaka 545-8522 (JP)**<br>• **YAMADA, Ryota**<br>**c/o Sharp Kabushiki Kaisha**<br>**Osaka 545-8522 (JP)** |
| (30) Priority: **18.02.2008 JP 2008036187** | (74) Representative: **Müller - Hoffmann & Partner Patentanwälte**<br>**Innere Wiener Strasse 17**<br>**81667 München (DE)** |
| (71) Applicant: **Sharp Kabushiki Kaisha**<br>**Osaka-shi, Osaka 545-8522 (JP)** | |
| (72) Inventors:<br>• **NAKAMURA, Osamu**<br>**c/o Sharp Kabushiki Kaisha**<br>**Osaka 545-8522 (JP)** | |

(54) **RELAY DEVICE, COMMUNICATION SYSTEM, AND COMMUNICATION METHOD**

(57)    Even when an amplifier has a comparatively narrow linear region in a terminal, it is possible to suppress degradation of the transmission characteristic by using single-carrier transmission between the terminal and a relay device while using multi-carrier transmission between the relay device and a base station on an uplink of a communication system. The relay station (1) includes: a single-carrier signal receiving portion (12) which receives a single-carrier signal from the terminal and performs signal processing; a converting portion (13) which converts a time region symbol output from the single-carrier signal receiving portion (12) into a frequency domain symbol; and a multi-carrier signal transmitting portion (14) which makes the symbol converted by the converting portion (13) to be a multi-carrier signal and transmits the multi-carrier signal to the base station.

FIG. 6

EP 2 247 011 A1

**Description**

TECHNICAL FIELD

The present invention relates to a relay device, a communication system, and a communication method and to a relay device converting a single-carrier signal from a terminal into a multi-carrier signal for output, a communication system having the relay device, and a communication method.

BACKGROUND OF THE INVENTION

Recently, a multi-carrier transmission such as OFDM (Orthogonal Frequency Division Multiplexing) or MC-CDMA (Multi-Carrier Code Division Multiple Access) ensuring good transmission characteristics even in the multi-path environment through a parallel transmission of a multiplicity of orthogonal narrow-band carriers has attracted attention in the radio communication.
A multi-carrier signal, however, has a high PAPR (Peak-to-Average Power Ratio), and hence nonlinearity of an amplifier becomes a problem. A single-carrier transmission, on the other hand, is becoming an attractive transmission technique for uplink (transmission from a terminal to a base station) due to its low PAPR.
The next generation mobile communication is very likely to be of a higher carrier frequency, with the result that electric waves may not possibly reach from the terminal to the base station (or from the base station to the terminal). Thus, a relay station is disposed between the terminal and the base station to develop a cellular service covering a wide area.
The relay station has hitherto equalized a received OFDM signal and transmitted an OFDM signal obtained by subjecting the equalized carrier data directly to the inverse discrete Fourier transform.
Fig. 15 is a block diagram of a configuration of an OFDM signal relay device described in Patent Document 1. In the diagram, reference numeral 100 denotes a receiving portion, 200 denotes a diversity combining portion, 300 denotes a transmitting portion, 400 denotes a synchronous circuit portion, and 500 denotes a carrier data combination factor calculating portion. The receiving portion 100 includes a down converter 101 acting as a frequency conversion circuit that converts each of input reception signals of one or more systems into an intermediate frequency signal, an A/D converter 102 that converts the intermediate frequency reception signal output from the down converter 101 into a digital signal, a quadrature detector 103 that performs a quadrature detection for the digital signal output from the A/D converter 102, and an FFT portion 104 that performs a discrete Fourier transform for a detection output signal output from the quadrature detector 103.
The diversity combining portion 200 includes a carrier data combining circuit 201.
The transmitting portion 300 includes an IFFT portion 301 that performs the inverse discrete Fourier transform for an output signal from the carrier data combining circuit 201, a quadrature modulator 302 that performs a quadrature modulation for an output signal from the IFFT portion 301, a D/A converter 303 that converts an output signal from the quadrature modulator 302 into an analog signal, and an up-converter 304 that again converts an output signal from the D/A converter 303 into an OFDM signal for output.
The synchronous circuit portion 400 generates a local signal for frequency conversion and a clock signal for digital sampling.
The carrier data combination factor calculating portion 500 includes a transmission line response calculation circuit 501 that calculates a frequency response corresponding to each of the reception signals of one or more systems and a frequency weighting factor calculation circuit 502 that calculates a weighting factor for diversity combining.
Specifically, in case of the OFDM signal relay device described in Patent Document 1, the receiving portion 100 converts each of the reception signals of a plurality of systems received by a plurality of receiving antennas into a baseband digital signal and then subjects the resultant signal to the quadrature detection and thereafter to the discrete Fourier transform. The diversity combining portion 200 performs the diversity combination for of the baseband digital signals of the plurality of systems. The transmitting portion 300 subjects the diversity-combined carrier data to the inverse discrete Fourier transform and then to the quadrature modulation for subsequent conversion into the OFDM signal of a desired frequency. The carrier data combination factor calculating portion 500 calculates a frequency response of a transmission line for each of the systems from system-by-system carrier data and calculates a carrier-by-carrier weighting factor used for the diversity combination from the frequency response.

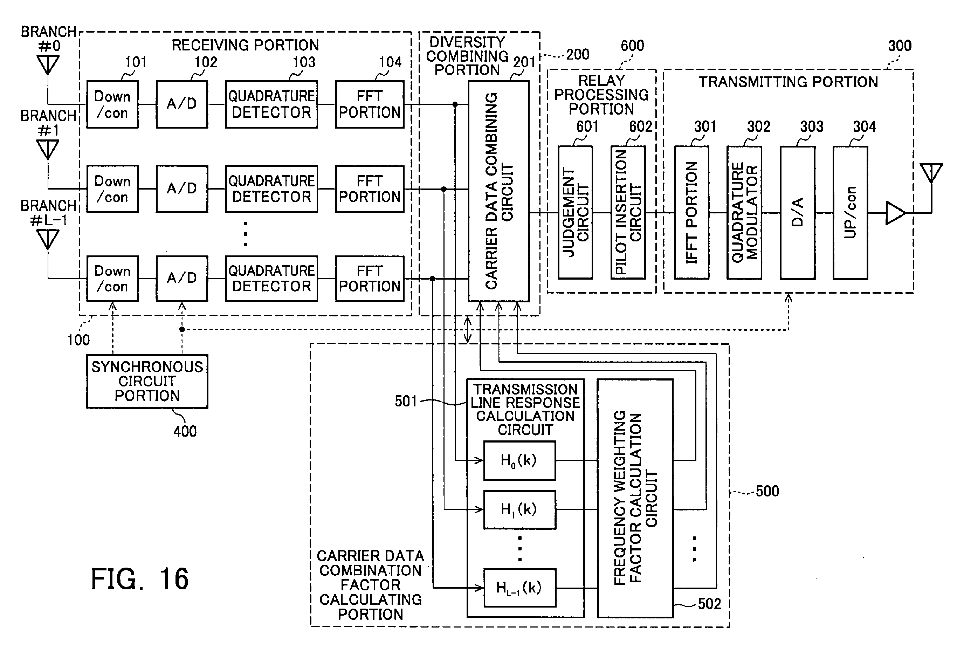

Fig. 16 is a block diagram of the configuration of the OFDM signal relay device described in Patent Document 2. In the diagram, reference numeral 100 denotes the receiving portion, 200 denotes the diversity combining portion, 300 denotes the transmitting portion, 400 denotes the synchronous circuit portion, 500 denotes the carrier data combination factor calculating portion, and 600 denotes a relay processing portion. The difference from the configuration of Patent Document 1 lies in the disposition of the relay processing portion 600 which includes a judgment circuit 601 and a pilot insertion circuit 602.

In this manner, the OFDM signal relay device of Patent Document 1 simply gives weighting to the received data for the transmission, whereas the OFDM signal relay device of Patent Document 2 allows the insertion of a regular pilot into the received data.

Patent Document 1: Japanese Laid-Open Patent Publication No. 2002-271291
Patent Document 2: Japanese Laid-Open Patent Publication No. 2002-330112
Nonpatent Document 1: D. Falconer, S. L. Ariyavisitakul, A. Benyamin-Seeyar, B. Eidson "Frequency domain equalization for single-carrier broadband wireless systems" IEEE Communication Magazine, Vol.40, No.4, pp.58-66, April 2002.

DISCLOSURE OF THE INVENTION

PROBLEMS TO BE SOLVED BY THE INVENTION

The prior techniques described in Patent Documents 1 and 2 are intended for TV broadcasts and use the OFDM for communication from a transmitter (TV tower) to a relay station and from the relay station to a receiver (terminal). This depends on the assumption that the transmitter and the relay station can be mounted with an expensive amplifier having a wider linear region, posing no specific problems with the linear region of the amplifier.
On the contrary, use of the OFDM for the uplink (transmission from a terminal to a base station) may cause a problem with the linear region of the amplifier mounted on the terminal since the OFDM transmission has a higher PAPR as compared with the single-carrier transmission. A normal terminal employs an inexpensive amplifier having a narrow linear region from the viewpoint of a reduction in cost and size, so that the OFDM transmission may cause a signal waveform distortion, resulting in a degradation of the transmission characteristics such as a lowering of the transmission rate.
The single-carrier transmission, on the other hand, does not undergo any characteristics degradation attributable to a narrowness of the linear region of the amplifier, but it has a lower coding gain with an error-correcting code as compared with the OFDM transmission due to the presence of an inter-symbol interference arising from the multi-path. Nonpatent Document 1, for example, says that the single-carrier transmission may become degraded in the transmission characteristics as compared with the OFDM transmission when the coding rate is low. Therefore, if the single-carrier transmission is applied to the transmission from the terminal to the relay station and the transmission from the relay station to the base station, then its transmission characteristics may possibly become degraded as compared with the case of using the OFDM transmission.
It is, however, difficult on an uplink of the conventional communication system to mount the terminal with the expensive amplifier having a wide linear region, therefore some communication systems may employ the single-carrier transmission irrespective of its transmission characteristics degradation.
The present invention was conceived in view of the above circumstances, and the object thereof is to suppress the degradation of transmission characteristics on an uplink of a communication system including a terminal, a relay device, and a base station as much as possible even when the terminal has an amplifier with a relatively narrow linear region, by applying a single-carrier transmission to the transmission from the terminal to the relay device and by applying a multi-carrier transmission to the transmission from the relay device to the base station.

MEANS FOR SOLVING THE PROBLEMS

In order to solve the above problems, a first technical means of the present invention is a relay device relaying a transmission signal transmitted from a transmitter to a receiver, wherein the relay device comprises a single-carrier signal receiving portion, a converting portion, and a multi-carrier signal transmitting portion, the single-carrier signal receiving portion executes a reception signal process for a single-carrier signal transmitted from the transmitter, the converting portion allocates an output signal from the single-carrier signal receiving portion to a subcarrier to convert into a frequency domain symbol, and the multi-carrier signal transmitting portion renders the frequency domain symbol into a multi-carrier signal for the transmission to the receiver.
A second technical means is the relay device of the first technical means, wherein the converting portion rearranges signals output from the single-carrier signal receiving portion before the conversion into the frequency domain symbol.
A third technical means is the relay device of the first technical means, wherein the converting portion includes a demodulating portion that performs a demodulation to bit and a symbol replica generating portion that generates a symbol replica from the demodulated bit sequence.
A fourth technical means is the relay device of the third technical means, wherein the symbol replica generating portion generates a symbol replica using a modulation technique different from a modulation technique received by at least one subcarrier.

A fifth technical means is the relay device of the first technical means, wherein the converting portion includes a demodulating portion that performs a demodulation to bit, an error correction decoding portion that performs an error correction decoding process, and a symbol replica generating portion that performs a modulation to symbol from the demodulated bit sequence.

A sixth technical means is the relay device of the first technical means, wherein the converting portion includes a demodulating portion that performs a demodulation to bit, an error correction decoding portion that performs an error correction decoding process, an error correction encoding portion that performs a recoding, and a modulating portion that performs a modulation to symbol.

A seventh technical means is a communication system in which a transmitter and a receiver communicate via a relay device with each other, wherein the transmitter comprises a single-carrier signal transmitting portion that transmits a single-carrier signal, the relay device comprises a single-carrier signal receiving portion that receives a single-carrier signal from the transmitter to perform signal processing, a converting portion that converts a time-region symbol output from the single-carrier signal receiving portion into a frequency domain symbol, and a multi-carrier signal transmitting portion that renders the symbol converted by the converting portion into a multi-carrier signal for the transmission to the receiver and the receiver comprises a multi-carrier signal receiving portion that receives a multi-carrier signal from the relay device.

An eighth technical means is a communication method used by a relay device relaying a transmission signal transmitted from a transmitter to a receiver, wherein the relay device has a step for receiving a single-carrier signal from the transmitter to perform signal processing, a step for converting a time-region symbol subjected to the signal processing into a frequency domain symbol, and a step for rendering the converted symbol into a multi-carrier signal for the transmission to the receiver.

## EFFECT OF THE INVENTION

According to the present invention, on an uplink of the communication system including the terminal, the relay device, and the base station, the degradation of transmission characteristics can be suppressed as much as possible even when the terminal has an amplifier with a relatively narrow linear region, by transmitting a single-carrier signal (low PAPR) from the terminal to the relay device and by converting the single-carrier signal into a multi-carrier signal (high PAPR) for the transmission to the base station.

Due to no necessity to mount the terminal with an expensive amplifier having a wide linear region, a reduction in size and cost of the terminal is achieved.

## BRIEF DESCRIPTION OF THE DRAWINGS

[Fig. 1] Fig. 1 is a diagram for comparison of a single-carrier signal waveform with a multi-carrier signal waveform.

[Fig. 2] Fig. 2 is a graph for explaining linear regions of a transmitter amplifier and a relay device amplifier.

[Fig. 3] Fig. 3 is a diagram of a configuration example of a communication system according to an embodiment of the present invention.

[Fig. 4] Fig. 4 is a block diagram of a configuration example of a terminal according to a first embodiment of the present invention.

[Fig. 5] Fig. 5 is a diagram of an example of a frame formed by a frame forming portion, the frame having a control signal for CRC, etc., and Np pilot signals inserted in front of $N_d$ data signals.

[Fig. 6] Fig. 6 is a block diagram of a configuration example of a relay station according to the first embodiment of the present invention.

[Fig. 7] Fig. 7 is a graph of signals after IDFT at $N_{SC}=16$ when the terminal performs a QPSK modulation.

[Fig. 8] Fig. 8 is a diagram of an example of spectra transmitted when distorted signals depicted in Fig. 7 ride on subcarriers for the execution of the transmission.

[Fig. 9] Fig. 9 is a block diagram of a configuration example of a base station according to the first embodiment of the present invention.

[Fig. 10] Fig. 10 is a block diagram of a configuration example of the relay station according to a second embodiment of the present invention.

[Fig. 11] Fig. 11 is a graph of an example of $N_{SC}$ data symbol replicas generated by the symbol replica generating portion based on a modulation technique transmitted from the terminal.

[Fig. 12] Fig. 12 is a graph of an example of hard-decision symbol replicas generated by the symbol replica generating portion.

[Fig. 13] Fig. 13 is a graph of an example of soft-decision symbol replicas generated by the symbol replica generating portion.

[Fig. 14] Fig. 14 is a block diagram of a configuration example of the relay station according to a third embodiment of the present invention.

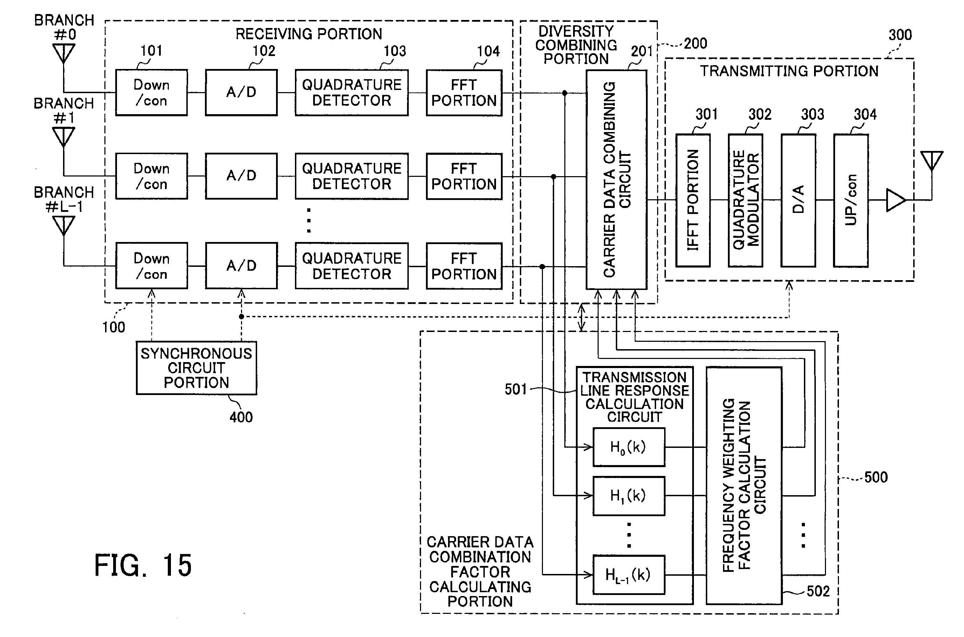

[Fig. 15] Fig. 15 is a block diagram of the configuration of an OFDM signal relay device described in Patent Document 1.

[Fig. 16] Fig. 16 is a block diagram of the configuration of the OFDM signal relay device described in Patent Document 2.

## EXPLANATIONS OF REFERENCE NUMERALS

1...relay device (relay station), 2...transmitter (terminal), 3...receiver (base station), 11, 15, 29, 31...antenna, 12...single-carrier signal receiving portion, 13,16,17...converting portion, 14...multi-carrier signal transmitting portion, 21,176...error correction encoding portion, 22,177...puncturing portion, 23, 178...interleaving portion, 24, 179...modulating portion, 25...frame forming portion, 26, 142...pilot signal generating portion, 27, 144...GI adding portion, 28,145...radio transmitting portion, 32,121...radio receiving portion, 33, 122...GI removing portion, 34,123...DFT portion, 35,124...pilot signal extracting portion, 36...synchronous detecting portion, 37...channel estimating portion, 38,161,171...demodulating portion, 39, 172...deinterleaving portion, 40,173...depuncturing portion, 41,174...error correction decoding portion, 42,175...error detecting portion, 100...receiving portion, 125...equalizing portion, 126...weight calculating portion, 127,143...IDFT portion, 141...frame forming portion, 162...symbol replica generating portion, 200...diversity combining portion, 300...transmitting portion, 400...synchronous circuit portion, 500...carrier data combination factor calculating portion, 700...relay processing portion

## PREFERRED EMBODIMENTS OF THE INVENTION

Referring to the accompanying drawings, description will now be given of preferred embodiments of a relay device, a communication system, and a communication method according to the present invention.

(First Embodiment)

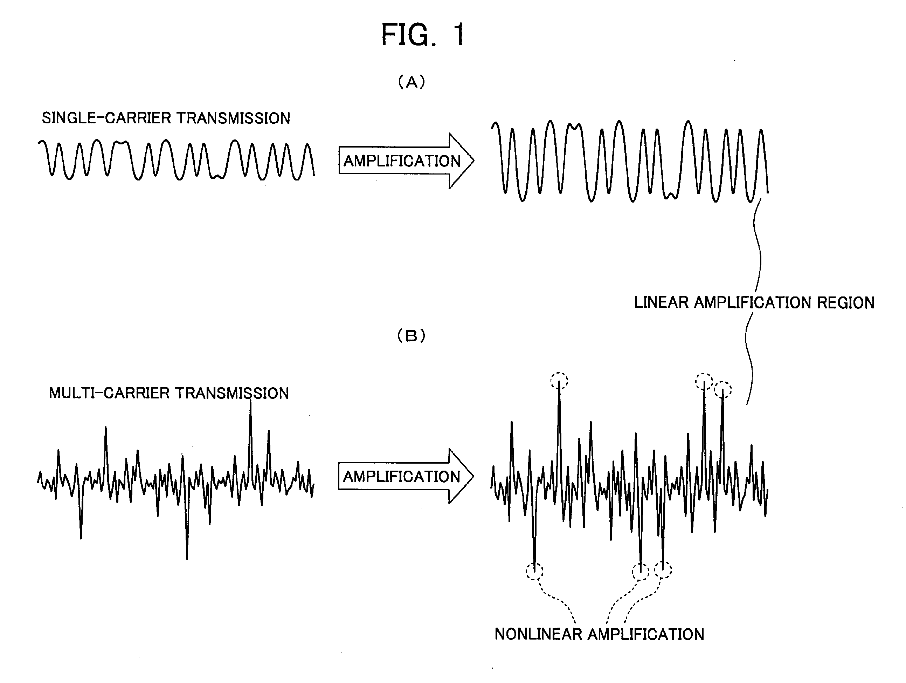

Fig. 1 is a diagram for comparison of a single-carrier signal waveform with a multi-carrier signal waveform. Fig. 1 (A) is a waveform diagram of a single-carrier signal and Fig. 1(B) is a waveform diagram of a multi-carrier signal. In a multi-carrier transmission such as OFDM and MC-CDMA, independently modulated carriers are superimposed, so that PAPR becomes higher as the number of subcarriers increases. Therefore, in case of using an amplifier with a narrow linear amplification region, the single-carrier signal can be amplified without any distortion as shown in Fig. 1(A), whereas the multi-carrier signal becomes distorted since the signals beyond the linearly amplifiable region cannot be linearly amplified as depicted by broken line circles of Fig. 1(B).

Transmission of signals distorted by the amplifier leads to a degradation of transmission characteristics. Use of an amplifier with a wider linear region therefor results in an increase in the size and cost of a terminal acting as the transmitter. The single-carrier transmission, on the other hand, has a lower PAPR as compared with the multi-carrier transmission and hence need not use the amplifier with a wider linear region. Thus, in this embodiment, the single-carrier signal is transmitted from the terminal.

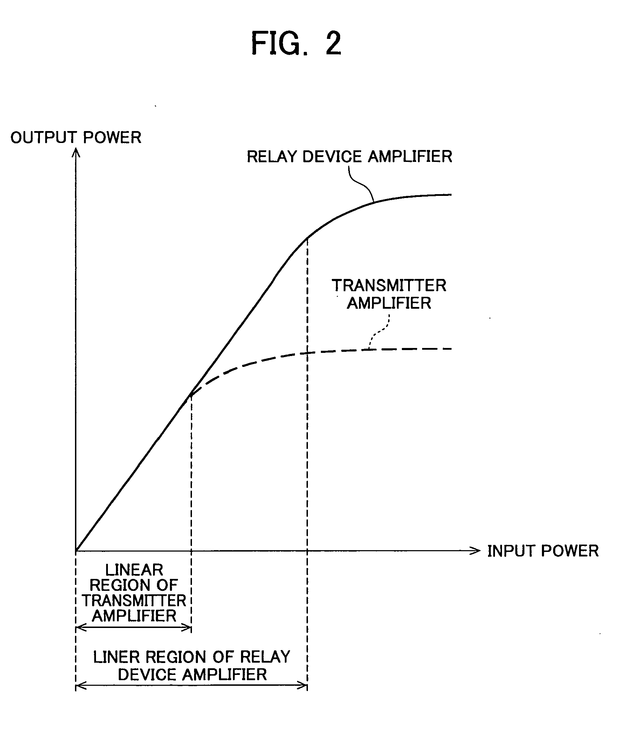

Fig. 2 is a graph for explaining linear regions of a transmitter amplifier and a relay device amplifier. On an uplink where transmission is performed from a terminal (transmitter) to a base station (receiver), signals transmitted from the terminal may not possibly reach the base station. It is therefore conceivable to dispose a relay device between the terminal and the base station. As described in the Nonpatent Document 1, however, there arises a problem that the transmission characteristics of the single-carrier transmission become degraded as compared with the OFDM transmission when the coding rate of the error correction encoding is low. In this case, as shown in Fig. 2, the relay device amplifier often has a wider linear region as compared with the terminal amplifier to secure a linear amplification region sufficient to amplify the multi-carrier signal.

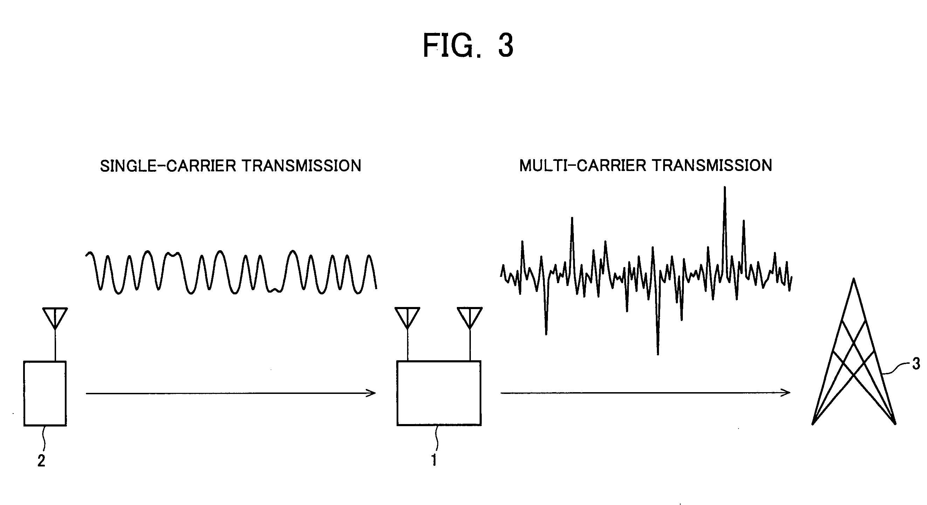

Fig. 3 is a diagram of a configuration example of a communication system according to an embodiment of the present invention. In the diagram, reference numeral 1 denotes a relay station corresponding to the relay device, 2 denotes the terminal corresponding to the transmitter, and 3 denotes the base station corresponding to the receiver. Thus, the single-carrier transmission is applied to the transmission from the terminal 2 to the relay station 1, which receives a single-carrier signal and converts the received single-carrier signal into a multi-carrier signal for transmission to the base station 3. The base station 3 demodulates the multi-carrier signal received.

Description of this embodiment will be made of a configuration example of the communication system having the relay station 1 converting the single-carrier signal into the multi-carrier signal.

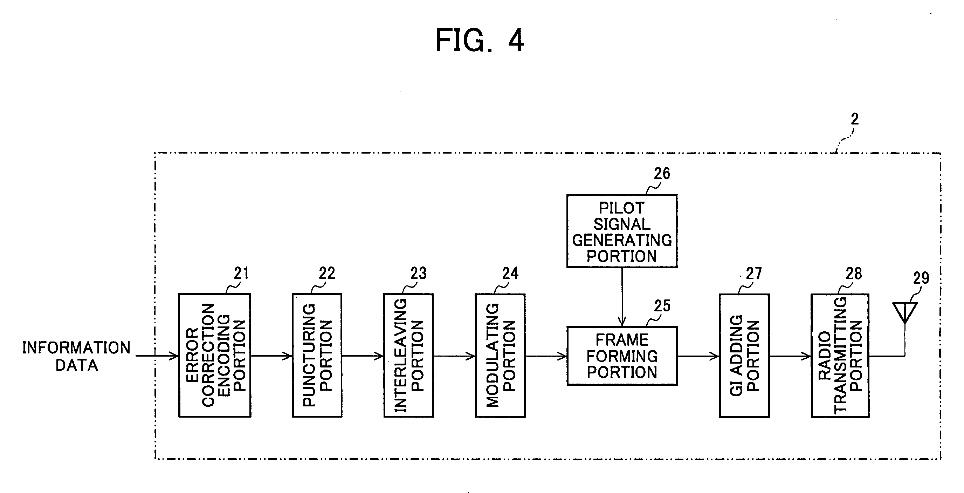

Fig. 4 is a block diagram of a configuration example of the terminal 2 according to a first embodiment of the present invention. The terminal 2 issues the single-carrier signal. As shown in Fig. 4, the terminal 2 includes an error correction encoding portion 21, a puncturing portion 22, an interleaving portion 23, a modulating portion 24, a frame forming portion 25, a pilot signal generating portion 26, a GI adding portion 27, a radio transmitting portion 28, and an antenna 29. An amplifier is disposed in the radio transmitting portion 28.

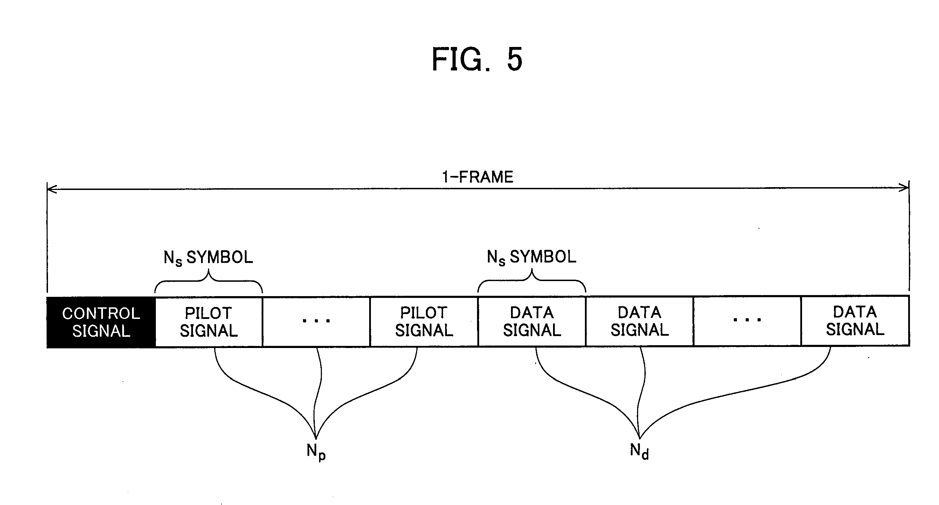

The terminal 2 enters an information bit sequence into the error correction encoding portion 21. Error correction encoding is performed in the error correction encoding portion 21. A coded bit sequence generated by the error correction encoding portion 21 is entered into the puncturing portion 22 for puncturing to a desired coding rate. An output from the puncturing portion 22 is entered into the interleaving portion 23 for bit-by-bit interleaving. The interleaved bit sequence in turn is entered into the modulating portion 24 for modulation to $N_{SC}$ data symbols for, e.g., QPSK (Quadrature Phase Shift Keying) or 16QAM (Quadrature Amplitude Modulation). The pilot signal generating portion 26 determines a pilot signal sequence to be sent and the frame forming portion 25 executes framing such as inserting a control signal for CRC (Cyclic Redundancy Check), etc., and Np pilot signals in front of $N_d$ data signals as shown in Fig. 5 for example. Afterward, the GI adding portion 27 copies only the last $N_{GI}$ of $N_{SC}$ symbols and pastes them at the head of the $N_{SC}$ symbols. The resultant symbols are then sent via the radio transmitting portion 28 from the antenna 29. Although the above description is given of a case where spread and code multiplexing are not performed, the spread and multiplexing may be carried out.

In this case, the radio transmitting portion 28 amplifies the signals before the transmission. Generally, the amplifier of the terminal 2 has a relatively narrow linear region, so that use of the transmission technique with a high PAPR may bring about a distortion attributable to the nonlinearity. The terminal 2 of this embodiment has a single-carrier frame forming portion (i.e., the frame forming portion 25) so as to transmit a signal through a low PAPR single-carrier transmission to thereby suppress the distortion attributable to the nonlinearity in the amplification.

A single-carrier signal transmitted from the terminal 2 of Fig. 4 is received via a channel by the relay station 1. The relay station 1 converts the single-carrier signal received from the terminal 2 into a multi-carrier signal and sends the multi-carrier signal to the base station 3.

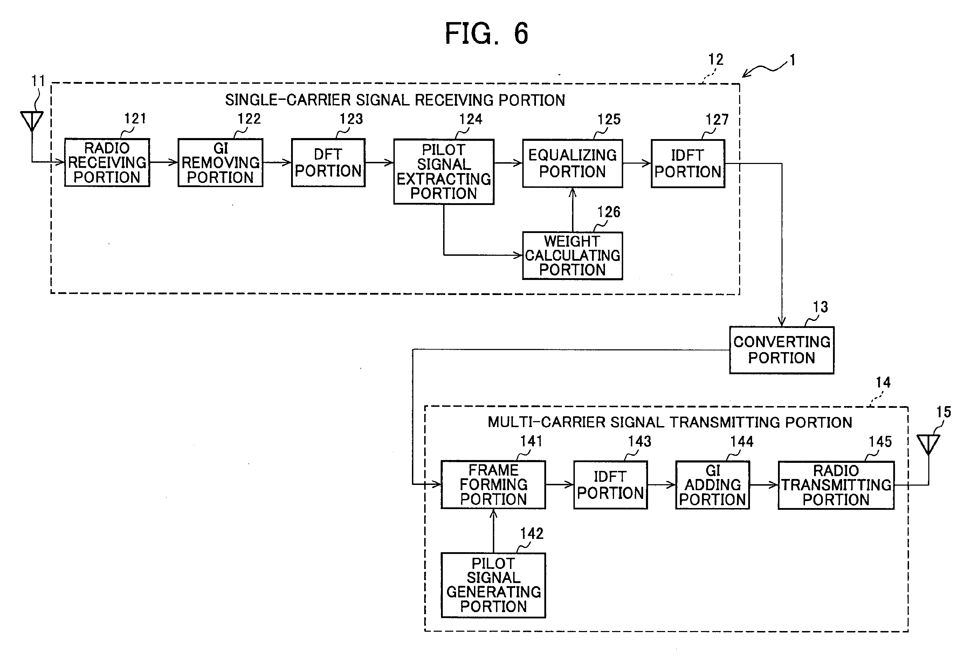

Fig. 6 is a block diagram of a configuration example of the relay station 1 according to the first embodiment of the present invention. In the diagram, the relay station 1 includes antennas 11 and 15, a single-carrier signal receiving portion 12, a converting portion 13, and a multi-carrier signal transmitting portion 14. The single-carrier signal receiving portion 12 includes a radio receiving portion 121, a GI removing portion 122, a DFT portion 123, a pilot signal extracting portion 124, an equalizing portion 125, a weight calculating portion 126, and an IDFT portion 127. The multi-carrier signal transmitting portion 14 includes a frame forming portion 141, a pilot signal generating portion 142, an IDFT portion 143, a GI adding portion 144, and a radio transmitting portion 145. An amplifier lies within the radio transmitting portion 145. The two antennas 11 and 15 may be the same antenna.

In the relay station 1, a signal received via the antenna 11 by the radio receiving portion 121 is subjected to a removal of $N_{GI}$ guard intervals by the GI removing portion 122 and thereafter is entered into the DFT portion 123 for the execution of an $N_{SC}$-point DFT(Discrete Fourier Transform). The output from the DFT portion 123 is input to the pilot signal extracting portion 124. In the pilot signal extracting portion 124, $N_p$ pilot signals are output to the weight calculating portion 126 and $N_d$ data signals are output to the equalizing portion 125. Using the $N_p$ pilot signals, the weight calculating portion 126 performs a channel estimation at every $N_{SC}$ point and, using an $N_{SC}$-point channel estimated value obtained, calculates an $N_{SC}$-point weight such as a ZF weight or an MMSE weight, which weight in turn is output to the equalizing portion 125. In the equalizing portion 125, the data signal input from the pilot signal extracting portion 124 is multiplied by the weight input from the weight calculating portion 126 for the execution of an equalization, the result of which is output to the IDFT portion 127. The IDFT portion 127 subjects input signals after $N_{SC}$-point equalization to the $N_{SC}$-point IDFT (Inverse Discrete Fourier Transform).

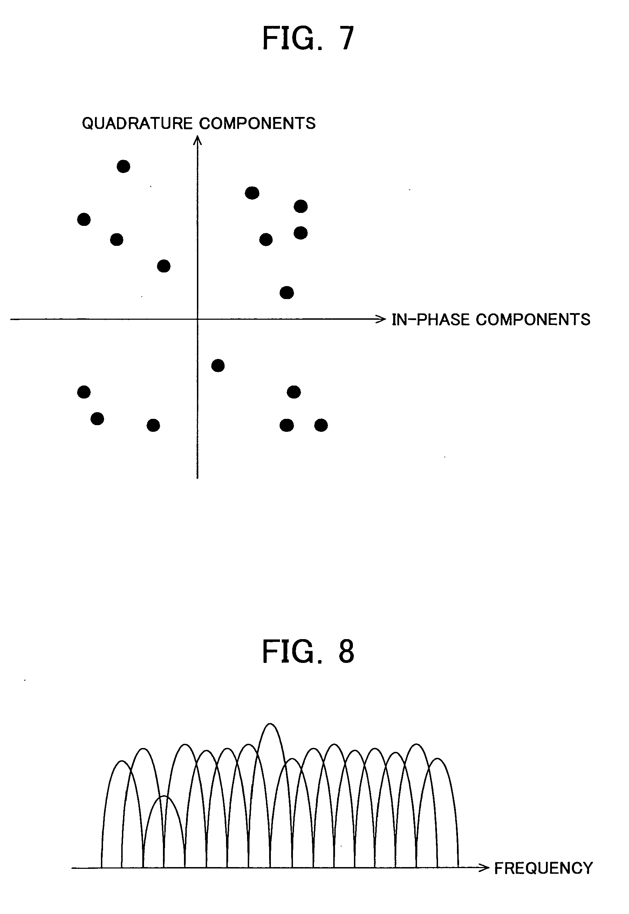

At that time, the terminal 2 performs the QPSK modulation, and the signals after IDFT at $N_{SC}=16$ are shown in Fig. 7. As shown in Fig. 7, the signals after IDFT become distorted by the effect of the channel, the noise, etc., due to a signal point arrangement sent from the terminal 2. The IDFT output result is output to the converting portion 13. The converting portion 13 rearranges a time domain signal as the IDFT output result to a frequency domain signal. Any allocating methods for conversion can be employed such as allocating signals in ascending order of time to subcarriers in ascending order of frequency, or allocating in descending order.

The signals converted in the converting portion 13 are input to the frame forming portion 141. As shown in Fig. 5 for example, the frame forming portion 141 inserts $N_p$ $N_{SC}$ pilot symbols input from the pilot signal generating portion 142 in front of input $N_d$ $N_{SC}$ symbol data signals to make one frame for the output to the IDFT portion 143. The frame input to the IDFT portion 143 undergoes $N_{MC}$-point IDFT every $N_{SC}$ symbols. That is, the signals distorted as shown in Fig. 7 ride on the subcarriers for the transmission. Spectra as depicted in Fig. 8 are thus issued therefrom.

The output from the IDFT portion 143 is output to the GI adding portion 144 every $N_{MC}$ symbols. The GI adding portion 144 copies only the last $N_{GI}$ of $N_{MC}$ symbols and pastes them at the head of the $N_{MC}$ symbols. The resultant symbols are then sent via the radio transmitting portion 145 from the antenna 15. In this embodiment, the relay station 1 resends a new pilot signal, but the pilot reflecting the effect of the distortion attributable to a fluctuation of the channel and to the multiplication of the weight may also be sent. Although the above description is given of a case where spread and multiplexing are not performed, the spread and multiplexing may be carried out.

In this case, the radio transmitting portion 145 amplifies the signals before the transmission. Generally, the amplifier of the relay station has a wider linear region than the terminal amplifier has, so that use of the transmission technique with a high PAPR may only bring about a little distortion arising from the nonlinearity. The relay station 1 of this embodiment includes the single-carrier signal receiving portion 12 (the receiving portion 121, the GI removing portion 122, the DFT portion 123, the pilot signal extracting portion 124, the equalizing portion 125, the weight calculating portion 126, and the IDFT portion 127), the converting portion 13, a multi-carrier frame forming portion (i.e., the frame forming portion 141), and an improvement in the frequency use efficiency can be consequently achieved by ensuring a signal transmission through the multi-carrier transmission having excellent transmission characteristics.

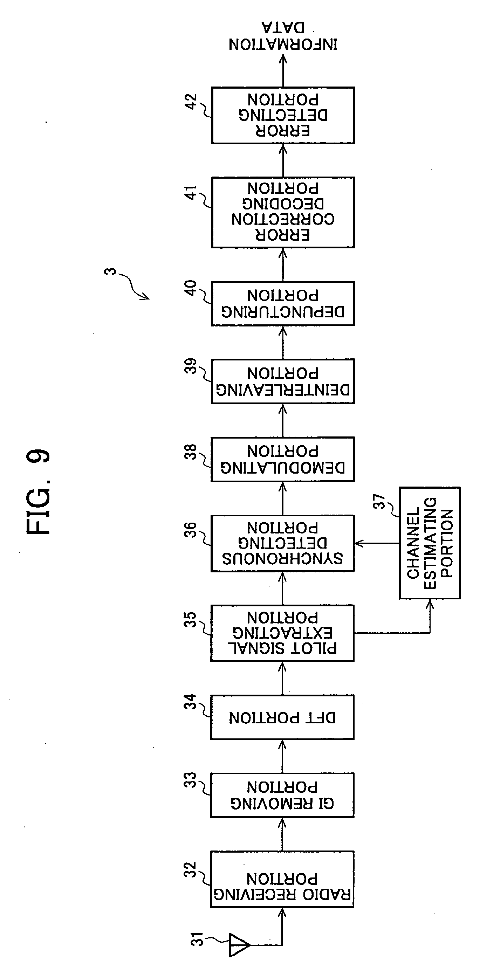

Fig. 9 is a block diagram of a configuration example of the base station 3 according to the first embodiment of the present invention. The multi-carrier signal transmitted from the relay station 1 of Fig. 6 is received via the channel by the base station 3. As shown in Fig. 9, the base station 3 includes an antenna 31, a radio receiving portion 32, a GI removing portion 33, a DFT portion 34, a pilot signal extracting portion 35, a synchronous detecting portion 36, a channel estimating portion 37, a demodulating portion 38, a deinterleaving portion 39, a depuncturing portion 40, an error correction decoding portion 41, and an error detecting portion 42. The base station 3 may include a single-carrier demodulating portion that demodulates a single-carrier signal that arrives directly from the terminal 2 without the intervention of the relay station 1.

In the base station 3, the signal received via the antenna 31 by the radio receiving portion 32 is subjected to a removal of $N_{GI}$ guard intervals at the GI removing portion 33 and then goes to the DFT portion 34 for the execution of $N_{MC}$-point DFT. The output from the DFT portion 34 is input to the pilot signal extracting portion 35. The pilot signal extracting portion 35 outputs Np pilot signals to the channel estimating portion 37 and outputs $N_d$ data signals to the synchronous detecting portion 36. The channel estimating portion 37 performs a channel estimation for each of $N_{SC}$ subcarriers using the Np pilot signals and outputs channel estimated values of the $N_{SC}$ subcarriers obtained to the synchronous detecting portion 36.

The synchronous detecting portion 36 multiplies each of the data signals input from the pilot signal extracting portion 35 by a complex conjugate of the channel estimated values and outputs the results to the demodulating portion 38. The demodulating portion 38 restores the resultant signals to a bit sequence based on the modulation executed by the terminal 2 and outputs the results to the deinterleaving portion 39. The deinterleaving portion 39 performs a deinterleaving based on the interleaving performed by the terminal 2 and outputs the result to the depuncturing portion 40. The depuncturing portion 40 depunctures unreceived bits and outputs the result to the error correction decoding portion 41. The error correction decoding portion 41 subjects the input bit sequence to an error correction decoding process and outputs the result to the error detection portion 42. The error detecting portion 42 detects errors of data signals using the CRC received and, if no error is detected, then outputs the input data signals as information data.

Thus, according the communication system of the first embodiment, the terminal performs a single-carrier transmission with a low PAPR to thereby prevent the problem with the linear region of the amplifier. This contributes to a reduction in the size and cost of the terminal. The relay station receives a single-carrier signal from the terminal and converts the received single-carrier signal into a multi-carrier signal for the transmission to the base station. Since the relay station converts the obtained symbol sequence into a multi-carrier signal previous to the transmission, excellent transmission characteristics are ensured through the error correction decoding process executed by the base station.

(Second Embodiment)

Although the above description of the first embodiment has been made of a case where the relay station 1 performs no bit demodulation, the configuration that the relay station performs a symbol-to-bit demodulation may be employed. In this embodiment, a configuration example will be described of a communication system performing the symbol-to-bit demodulation and generating and transmitting a symbol replica.

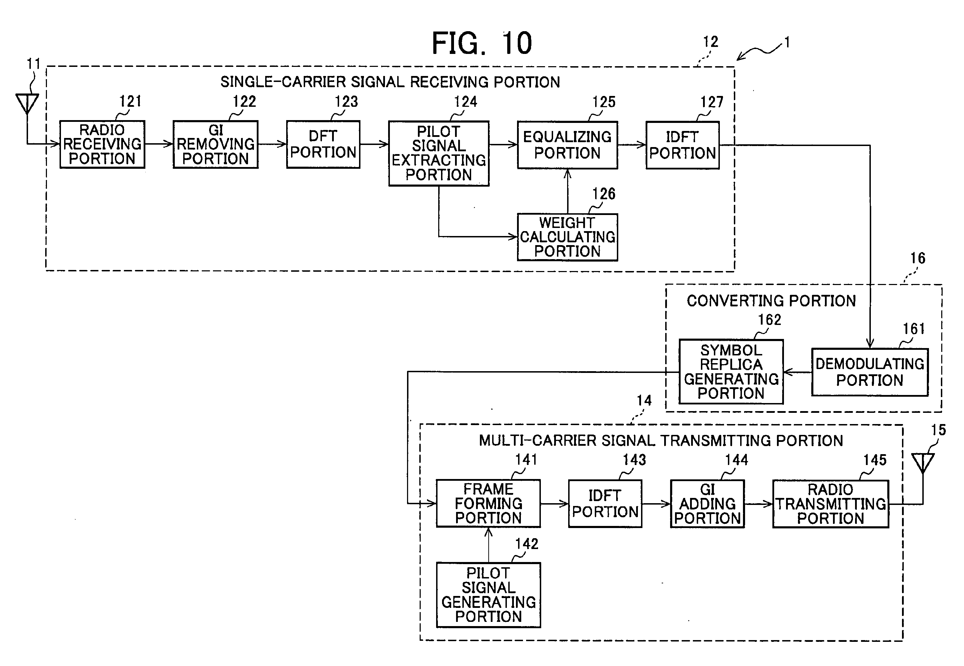

Fig. 10 is a block diagram of a configuration example of the relay station 1 according to the second embodiment of the present invention. In the diagram, the relay station 1 includes the antennas 11 and 15, the single-carrier signal receiving portion 12, a converting portion 16, and the multi-carrier signal transmitting portion 14. The single-carrier signal transmitting portion 12 includes the radio receiving portion 121, the GI removing portion 122, the DFT portion 123, the pilot signal extracting portion 124, the equalizing portion 125, the weight calculating portion 126, and the IDFT portion 127. The multi-carrier signal transmitting portion 14 includes the frame forming portion 141, the pilot signal generating portion 142, the IDFT portion 143, the GI adding portion 144, and the radio transmitting portion 145. The converting portion 16 includes a demodulating portion 161 and a symbol replica generating portion 162. An amplifier lies within the radio transmitting portion 145.

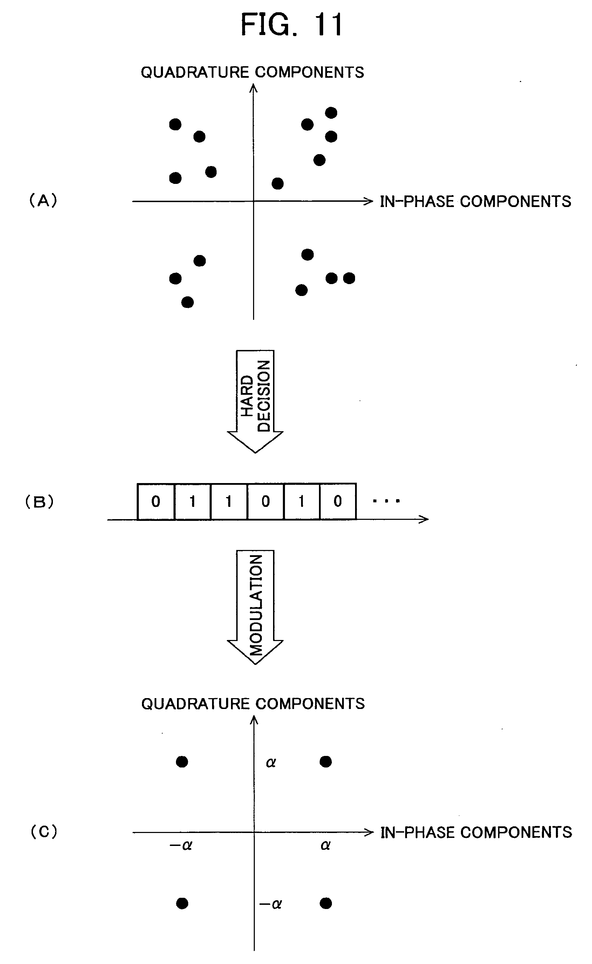

A single-carrier signal transmitted from the terminal 2 similar to that of the first embodiment shown in Fig. 4 is received by the relay station 1. In the relay station 1, the processes performed by the single-carrier signal receiving portion 12 are similar to those of the first embodiment and therefore will not again be described. The output from the IDFT portion 127 of the single-carrier signal receiving portion 12 is input to the demodulating portion 161. The demodulating portion 161 restores $N_{SC}$ symbols to a bit sequence based on the modulation technique employed in the terminal 2 and inputs the sequence into the symbol replica generating portion 162. As shown in Fig. 11 (A), (B), and (C), the symbol replica generating portion 162 makes a hard-decision of the bit sequence output from the demodulating portion to obtain a hard-decision bit sequence and then generates $N_{SC}$ data symbol replicas based on the modulation technique transmitted from the terminal 2 to output to the frame forming portion 141. The symbol replica generating portion may make a transmission to the base station using a modulation technique different from the modulation technique transmitted from the terminal 2.

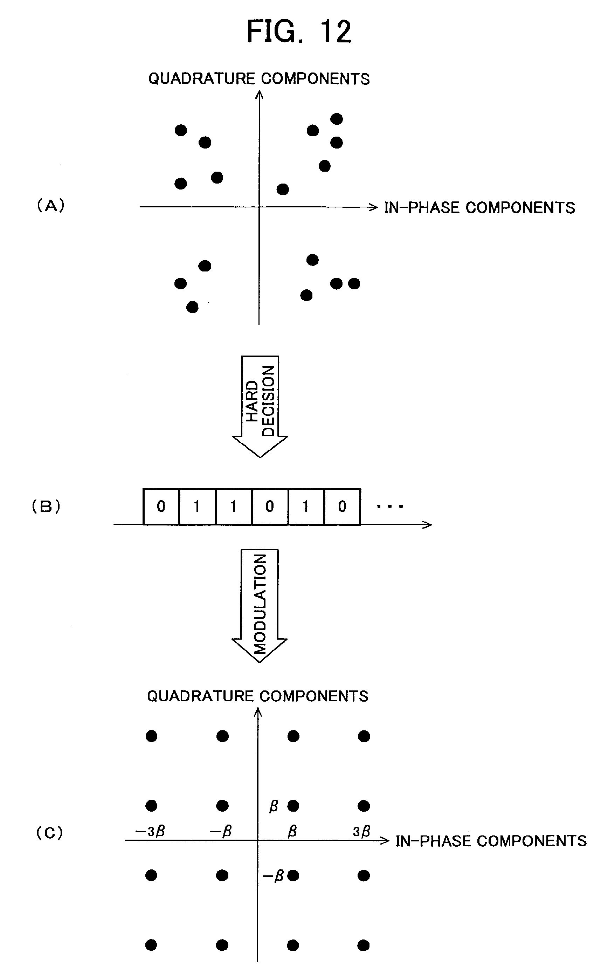

This will be described referring to Fig. 12(A), (B), and (C) by way of example. In Fig. 12, a bit sequence output from the demodulating portion undergoes a hard-decision to obtain a hard-decision bit sequence, which is in turn transmitted to the base station using a modulation technique (16QAM herein) different from the modulation technique (QPSK herein) transmitted. Such a change of the demodulation technique by the relay station may lead to an improved frequency use efficiency.

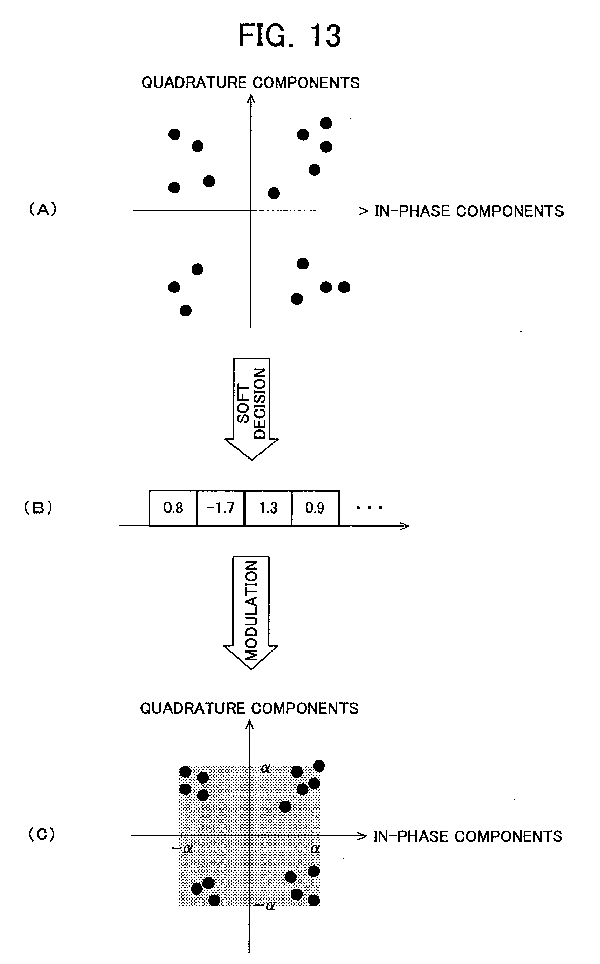

Although Fig. 11 exemplarily shows a hard-decision symbol replica generation, a soft-decision symbol replica may be generated. Fig. 13(A), (B), and (C) shows an example of generating QPSK symbol replicas such that their in-phase components and quadrature components both have an amplitude of $\alpha$ or less using a soft-decision bit sequence output from the demodulating portion. A specific example of the generation of the symbol replicas may include using a $k^{th}$-bit soft-decision bit sequence b(k) output from the demodulating portion.

[Expression 1]

$$\tilde{b}(k) = \tanh\left[\frac{b(k)}{2}\right] \qquad \ldots \text{Eq.}(1)$$

The QPSK symbol replicas are generated by alternately allocating a sequence obtained from Eq.(1) to the in-phase components and to the quadrature components. It is to be noted that the above equation need not necessarily to be applied and that any one can be available as long as it uses the soft-decision bit sequence b(k).

The output of the symbol replica generating portion 162 is input to the frame forming portion 141. As shown in Fig. 5 for example, the frame forming portion 141 inserts $N_p$ $N_{SC}$ pilot symbols input from the pilot signal generating portion 142 in front of input $N_d$ $N_{SC}$ symbol data signals to make one frame for the output to the IDFT portion 143.

It is to be understood that the pilot signal generating portion 142 may regenerate pilots having a certain amplitude or that it may issue pilots reflecting the effects of a distortion induced by the replica likelihood, the channel fluctuation, and the weight multiplication. The frame input to the IDFT portion 143 undergoes $N_{MC}$-point IDFT every $N_{SC}$ symbols and is output to the GI adding portion 144 every $N_{MC}$ symbols. The GI adding portion 144 copies only the last $N_{GI}$ of $N_{MC}$ symbols and pastes them at the head of the $N_{MC}$ symbols. The results are then transmitted via the radio transmitting portion 145 from the antenna 15. The resultant transmission signals are then received by the base station 3 of the first embodiment shown in Fig. 9.

Thus, according to the communication system of the second embodiment, the terminal performs a single-carrier transmission with a low PAPR to thereby prevent the problem with the linear region of the amplifier. This contributes to a reduction in the size and cost of the terminal. The relay station receives a single-carrier signal transmitted from the terminal and converts the received single-carrier signal into a multi-carrier signal for the transmission to the base station. Since the relay station may make a change to a modulation technique other than the modulation technique transmitted from the terminal, an improved frequency use efficiency is achieved. Moreover, since the relay station converts the obtained symbol sequence into a multi-carrier signal previous to the transmission, excellent transmission characteristics are ensured through the error correction decoding process executed by the base station.

(Third Embodiment)

In a case where the channel environment is poor between the relay station and the base station, the configuration that the relay station performs the error correction decoding process may be employed. Description of this embodiment will be made of a configuration example of the communication system in which the relay station carries out the error correction decoding.

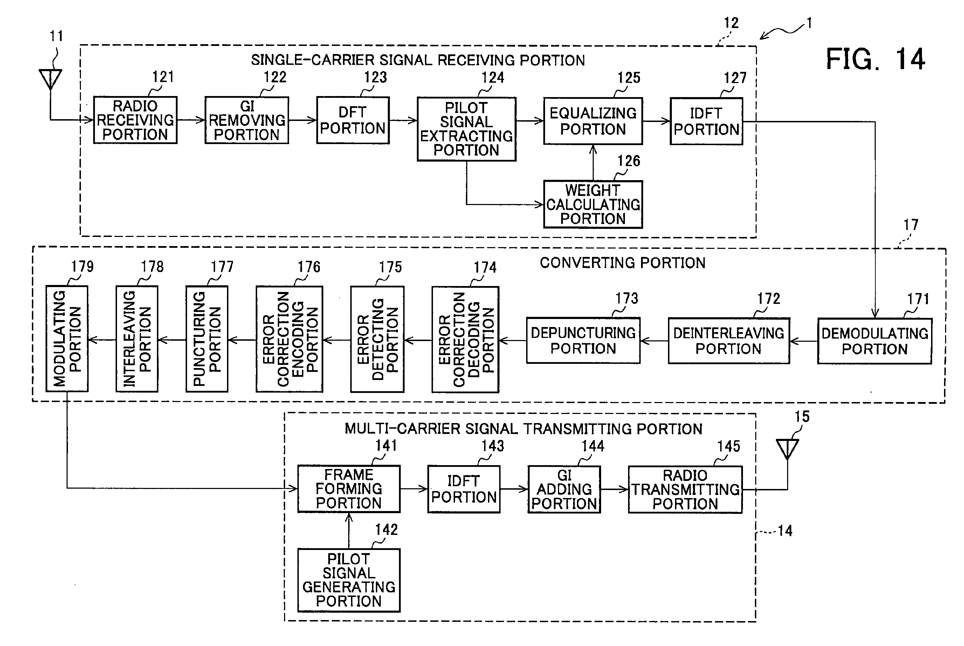

Fig. 14 is a block diagram of a configuration example of the relay station according to a third embodiment of the present invention. In the diagram, the relay station 1 includes the antennas 11 and 15, the single-carrier signal receiving portion 12, a converting portion 17, and the multi-carrier signal transmitting portion 14. The single-carrier signal receiving portion 12 includes the radio receiving portion 121, the GI removing portion 122, the DFT portion 123, the pilot signal extracting portion 124, the equalizing portion 125, the weight calculating portion 126, and the IDFT portion 127. The multi-carrier signal transmitting portion 14 includes the frame forming portion 141, the pilot signal generating portion 142, the IDFT portion 143, the GI adding portion 144, and the radio transmitting portion 145. The converting portion 17 includes a demodulating portion 171, a deinterleaving portion 172, a depuncturing portion 173, an error correction decoding portion 174, an error detecting portion 175, an error correction encoding portion 176, a puncturing portion 177, an interleaving portion 178, and a modulating portion 179.

A single-carrier signal transmitted from the terminal 2 similar to that of the first embodiment shown in Fig. 4 is received by the relay station 1. In the relay station 1, the processes performed by the single-carrier signal receiving portion 12 are similar to those of the first embodiment and therefore will not again be described. The output from the IDFT portion 127 of the single-carrier signal receiving portion 12 is input to the demodulating portion 171. The demodulating portion 171 restores $N_{SC}$ data symbols to a bit sequence based on the modulation technique employed in the terminal 2 and outputs the sequence into the deinterleaving portion 172. The deinterleaving portion 172 performs a deinterleaving based on the interleaving performed by the terminal 2 and outputs the result to the depuncturing portion 173. The depuncturing portion 173 depunctures unreceived bits for the output to the error correction decoding portion 174. The error correction decoding portion 174 performs the error correction decoding process using the input bit sequence. The error correction decoding portion 174 outputs a soft-decision bit sequence of the error correction decoding into the puncturing portion 177.

The puncturing portion 177 performs a puncturing to a desired coding ratio. The puncturing pattern at that time may be different from the puncturing pattern employed in the terminal 2. The output from the puncturing portion 177 is input to the interleaving portion 178. The punctured bit sequence is subjected to a bit-by-bit interleaving at the interleaving portion 178. The interleaved soft-decision bit sequence is input to a symbol replica generating portion not shown in a figure to generate $N_{SC}$ data symbol replicas for e. g. , QPSK or 16QAM using the input bit sequence, which in turn are output to the frame forming portion 141. Although in this embodiment the output from the error correction decoding portion is input to the puncturing portion 177, the input to the puncturing portion 177 may be made after subjecting the hard-decision information bit sequence to the error correction encoding at the error correction encoding portion 176 in the same manner as in the terminal 2 when no error is detected as a result of the error detection by the error detecting portion 175 using the output from the error correction decoding portion 174. The modulation technique may be different from the modulation technique transmitted from the terminal 2. The modulation technique or the coding rate may be controlled depending on the condition of the channel between the relay station 1 and the base station 3.

Hereinafter, the processes performed by the multi-carrier signal transmitting portion 14 are similar to those of the second embodiment shown in Fig. 10 and therefore will not again be described herein.

Thus, according to the communication system of the third embodiment, the terminal performs a single-carrier transmission with a low PAPR to thereby prevent the problem with linear region of the amplifier. This contributes to a reduction in the size and cost of the terminal. The relay station receives a single-carrier signal transmitted from the terminal and converts the received single-carrier signal into a multi-carrier signal for the transmission to the base station. The execution of the error correction decoding at the relay station allows the relay station to obtain a coding gain. Moreover, since the relay station converts the obtained symbol sequence into a multi-carrier signal previous to the execution of the transmission, excellent transmission characteristics are ensured through the error correction decoding process executed by the base station.

**Claims**

**1.** A relay device relaying a transmission signal transmitted from a transmitter to a receiver, wherein
the relay device comprises a single-carrier signal receiving portion, a converting portion, and a multi-carrier signal transmitting portion,
the single-carrier signal receiving portion executes a reception signal process for a single-carrier signal transmitted from the transmitter,
the converting portion allocates an output signal from the single-carrier signal receiving portion to a subcarrier to convert into a frequency domain symbol, and
the multi-carrier signal transmitting portion renders the frequency domain symbol into a multi-carrier signal for the transmission to the receiver.

**2.** The relay device as defined in claim 1, wherein
the converting portion rearranges signals output from the single-carrier signal receiving portion before the conversion into the frequency domain symbol.

**3.** The relay device as defined in claim 1, wherein
the converting portion includes a demodulating portion that performs a demodulation to bit and a symbol replica generating portion that generates a symbol replica from the demodulated bit sequence.

**4.** The relay device as defined in claim 3, wherein
the symbol replica generating portion generates a symbol replica using a modulation technique different from a modulation technique received by at least one subcarrier.

**5.** The relay device as defined in claim 1, wherein
the converting portion includes a demodulating portion that performs a demodulation to bit, an error correction decoding portion that performs an error correction decoding process, and a symbol replica generating portion that performs a modulation to symbol from the demodulated bit sequence.

**6.** The relay device as defined in claim 1, wherein
the converting portion includes a demodulating portion that performs a demodulation to bit, an error correction decoding portion that performs an error correction decoding process, an error correction encoding portion that performs a recoding, and a modulating portion that performs a modulation to symbol.

**7.** A communication system in which a transmitter and a receiver communicate via a relay device with each other, wherein
the transmitter comprises a single-carrier signal transmitting portion that transmits a single-carrier signal,
the relay device comprises a single-carrier signal receiving portion that receives a single-carrier signal from the transmitter to perform signal processing, a converting portion that converts a time-region symbol output from the single-carrier signal receiving portion into a frequency domain symbol, and a multi-carrier signal transmitting portion that renders the symbol converted by the converting portion into a multi-carrier signal for the transmission to the receiver, and
the receiver comprises a multi-carrier signal receiving portion that receives a multi-carrier signal from the relay device.

**8.** A communication method used by a relay device relaying a transmission signal transmitted from a transmitter to a receiver, wherein
the relay device has a step for receiving a single-carrier signal from the transmitter to perform signal processing, a step for converting a time-region symbol subjected to the signal processing into a frequency domain symbol, and a step for rendering the converted symbol into a multi-carrier signal for the transmission to the receiver.

# FIG. 1

## (A)

SINGLE-CARRIER TRANSMISSION

AMPLIFICATION

LINEAR AMPLIFICATION REGION

## (B)

MULTI-CARRIER TRANSMISSION

AMPLIFICATION

NONLINEAR AMPLIFICATION

EP 2 247 011 A1

# FIG. 2

OUTPUT POWER

RELAY DEVICE AMPLIFIER

TRANSMITTER AMPLIFIER

INPUT POWER

LINEAR REGION OF TRANSMITTER AMPLIFIER

LINER REGION OF RELAY DEVICE AMPLIFIER

# FIG. 3

SINGLE-CARRIER TRANSMISSION

MULTI-CARRIER TRANSMISSION

FIG. 4

2

INFORMATION DATA → ERROR CORRECTION ENCODING PORTION (21) → PUNCTURING PORTION (22) → INTERLEAVING PORTION (23) → MODULATING PORTION (24) → FRAME FORMING PORTION (25) → GI ADDING PORTION (27) → RADIO TRANSMITTING PORTION (28) → (29)

PILOT SIGNAL GENERATING PORTION (26) → FRAME FORMING PORTION (25)

# FIG. 5

1-FRAME

$N_S$ SYMBOL

$N_S$ SYMBOL

| CONTROL SIGNAL | PILOT SIGNAL | . . . | PILOT SIGNAL | DATA SIGNAL | DATA SIGNAL | . . . | DATA SIGNAL |
|---|---|---|---|---|---|---|---|

$N_p$

$N_d$

# FIG. 6

EP 2 247 011 A1

# FIG. 7

QUADRATURE COMPONENTS

IN-PHASE COMPONENTS

# FIG. 8

FREQUENCY

FIG. 9

RADIO RECEIVING PORTION ~32

GI REMOVING PORTION ~33

DFT PORTION ~34

PILOT SIGNAL EXTRACTING PORTION ~35

CHANNEL ESTIMATING PORTION ~37

SYNCHRONOUS DETECTING PORTION ~36

DEMODULATING PORTION ~38

DEINTERLEAVING PORTION ~39

DEPUNCTURING PORTION ~40

ERROR CORRECTION DECODING PORTION ~41

ERROR DETECTING PORTION ~42

INFORMATION DATA

31

3

# FIG. 10

EP 2 247 011 A1

# FIG. 11

QUADRATURE COMPONENTS

(A)

IN-PHASE COMPONENTS

HARD
DECISION

(B)

| 0 | 1 | 1 | 0 | 1 | 0 |
|---|---|---|---|---|---|

· · ·

MODULATION

QUADRATURE COMPONENTS

(C)

IN-PHASE COMPONENTS

$\alpha$

$-\alpha$          $\alpha$

$-\alpha$

# FIG. 12

QUADRATURE COMPONENTS

(A)

IN-PHASE COMPONENTS

HARD DECISION

(B)

| 0 | 1 | 1 | 0 | 1 | 0 | · · · |

MODULATION

QUADRATURE COMPONENTS

(C)

$-3\beta$   $-\beta$   $\beta$   $3\beta$   IN-PHASE COMPONENTS

$\beta$

$-\beta$

# FIG. 13

QUADRATURE COMPONENTS

(A)

IN-PHASE COMPONENTS

SOFT DECISION

(B)

| 0.8 | −1.7 | 1.3 | 0.9 | ・・・ |

MODULATION

QUADRATURE COMPONENTS

(C)

$\alpha$

$-\alpha$    $\alpha$

IN-PHASE COMPONENTS

$-\alpha$

# FIG. 14

**SINGLE-CARRIER SIGNAL RECEIVING PORTION (12)**

- RADIO RECEIVING PORTION (121)
- GI REMOVING PORTION (122)
- DFT PORTION (123)
- PILOT SIGNAL EXTRACTING PORTION (124)
- EQUALIZING PORTION (125)
- WEIGHT CALCULATING PORTION (126)
- IDFT PORTION (127)

**CONVERTING PORTION (17)**

- DEMODULATING PORTION (171)
- DEINTERLEAVING PORTION (172)
- DEPUNCTURING PORTION (173)
- ERROR CORRECTION DECODING PORTION (174)
- ERROR DETECTING PORTION (175)
- ERROR CORRECTION ENCODING PORTION (176)
- PUNCTURING PORTION (177)
- INTERLEAVING PORTION (178)
- MODULATING PORTION (179)

**MULTI-CARRIER SIGNAL TRANSMITTING PORTION (14)**

- FRAME FORMING PORTION (141)
- PILOT SIGNAL GENERATING PORTION (142)
- IDFT PORTION (143)
- GI ADDING PORTION (144)
- RADIO TRANSMITTING PORTION (145)

1, 11, 15

FIG. 15

EP 2 247 011 A1

FIG. 16

EP 2 247 011 A1

## INTERNATIONAL SEARCH REPORT

| International application No. |
| --- |
| PCT/JP2009/052367 |

A. CLASSIFICATION OF SUBJECT MATTER
*H04J11/00(2006.01)i, H04B7/208(2006.01)i*

According to International Patent Classification (IPC) or to both national classification and IPC

B. FIELDS SEARCHED

Minimum documentation searched (classification system followed by classification symbols)
H04J11/00, H04B7/208

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2002-511706 A (Fraunhofer-Gesellschaft zur Forderung der Angewandten Forschung E.V.), 16 April, 2002 (16.04.02), Par. Nos. [0009] to [0012]; Fig. 2 & EP 1072132 A          & WO 1999/053660 A1 | 1-3,7-8<br>4-6 |
| Y | JP 10-032557 A (NEC Corp.), 03 February, 1998 (03.02.98), Par. Nos. [0037] to [0041] (Family: none) | 4 |
| Y | JP 11-088287 A (Advanced Digital Television Broadcasting Laboratory), 30 March, 1999 (30.03.99), Par. Nos. [0045] to [0051]; Fig. 2 (Family: none) | 5-6 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>30 April, 2009 (30.04.09) | Date of mailing of the international search report<br>19 May, 2009 (19.05.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/052367

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-098104 A (Advanced Digital Television Broadcasting Laboratory), 09 April, 1999 (09.04.99), Par. Nos. [0053] to [0063]; Fig. 2 (Family: none) | 5-6 |
| A | JP 2000-013298 A (Victor Company Of Japan, Ltd.), 14 January, 2000 (14.01.00), Claim 1 (Family: none) | 1-8 |
| A | JP 01-261945 A (Fujitsu Ltd.), 18 October, 1989 (18.10.89), Page 3, lower right part, column of "Action" (Family: none) | 1-8 |
| A | JP 2004-221920 A (Kenwood Corp.), 05 August, 2004 (05.08.04), Full text; all drawings (Family: none) | 1-8 |
| A | JP 2002-271291 A (Nippon Hoso Kyokai), 20 September, 2002 (20.09.02), Full text; all drawings (Family: none) | 1-8 |
| A | JP 2002-330112 A (Nippon Hoso Kyokai), 15 November, 2002 (15.11.02), Full text; all drawings (Family: none) | 1-8 |
| A | JP 2006-295778 A (KDDI Corp.), 26 October, 2006 (26.10.06), Full text; all drawings & US 2006/0264172 A1 | 1-8 |
| A | JP 2000-031876 A (Kokusai Electric Co., Ltd.), 28 January, 2000 (28.01.00), Full text; all drawings (Family: none) | 1-8 |
| P,A | WO 2008/044554 A1 (Matsushita Electric Industrial Co., Ltd.), 17 April, 2008 (17.04.08), Full text; all drawings (Family: none) | 1-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002271291 A

- JP 2002330112 A

**Non-patent literature cited in the description**

- **D. Falconer ; S. L. Ariyavisitakul ; A. Benyamin-Seeyar ; B. Eidson.** Frequency domain equalization for single-carrier broadband wireless systems. *IEEE Communication Magazine,* April 2002, vol. 40 (4), 58-66